# EUROPEAN PATENT SPECIFICATION

(11) **EP 1 179 731 B1**
(45) Date of publication and mention of the grant of the patent: **05.04.2006**
(21) Application number: 00311200.0
(22) Date of filing: 14.12.2000
(51) Int. Cl.: G01N 27/49

(54) **Galvanic gas sensor with an oxygen reduction counter electrode**
Galvanischer Gassensor mit einer Sauerstoff reduzierenden Gegenelektrode
Capteur de gas galvanique avec une contre-électrode qui reduit oxygène

(30) Priority: 01.08.2000 JP 2000232658
(43) Date of publication of application: 13.02.2002
(73) Proprietor: RIKEN KEIKI CO., LTD., Tokyo 174 (JP)
(72) Inventor: Matsuda, Hiroyuki, c/o Riken Keiki Co., Ltd., Tokyo (JP)
(74) Representative: Haley, Stephen

(56) References cited:
- EP-A- 0 604 012
- EP-A- 0 763 730
- WO-A-01/31326
- GB-A- 2 094 005
- US-A- 4 171 253
- DATABASE COMPENDEX [Online] ENGINEERING INFORMATION, INC., NEW YORK, NY, US; DOBSON J V ET AL: "ELECTROCHEMICALLY DERIVED VALUES OF THE PERMEABILITY COEFFICIENT OF COMMON GASES THROUGH PTFE MEMBRANES BETWEEN 9 AND 41 degree C" Database accession no. EIX86050064611 XP002185887 & ELECTROCHIM ACTA FEB 1986, vol. 31, no. 2, February 1986 (1986-02), pages 235-239,

## Description

This invention relates to a voltaic gas sensor comprising a working electrode and a counter electrode disposed on both sides of an electrolyte.

A voltaic sensor comprises a working electrode formed by attaching a layer of an electrically conductive active substance on a diaphragm admitting a gas to be detected and having a water-repellent property and a counter electrode that are immersed in an electrolyte and spaced apart from each other at a distance sufficient to keep the gas from reaching the counter electrode, usually 20 to 30 mm.

The need to prevent the gas from reaching the counter electrode by keeping the counter electrode a sufficient distance apart from the diaphragm has made it difficult to slim down the sensor.

WO-A-0131326 discloses an electrochemical gas sensor assembly and method. EP-A-0604012 discloses an electrochemical gas sensor. EP-A-0763730 discloses an electrochemical gas sensor assembly.

The object of this invention is to provide a slim but sufficiently accurate voltaic gas sensor by interposing a filter paper or other water-absorbent material between the working and counter electrodes.

Accordingly, the invention resides in a voltaic gas sensor for detecting a gas other than oxygen, the sensor comprising a working electrode formed by attaching a layer of an electrically conductive active substance on a diaphragm admitting said gas and having a water-repellent property, a selectively permeable film substantially not permitting the permeation of said gas while permitting the permeation of oxygen, a counter electrode stuck fast to the back of said selectively permeable film, and a sheet impregnated with an electrolyte disposed between said working electrode and said selectively permeable film, said diaphragm being held in a casing in such a manner as to be exposed to the atmosphere,
characterised in that:
said casing comprises a cover having an opening in the central part thereof, a cylindrical casing proper and a cylindrical intermediate casing with one end closed, with an elastic frame whose periphery is supported by said cylindrical intermediate casing with one end closed; and
said cover holds said working and counter electrodes and said sheet therebetween.

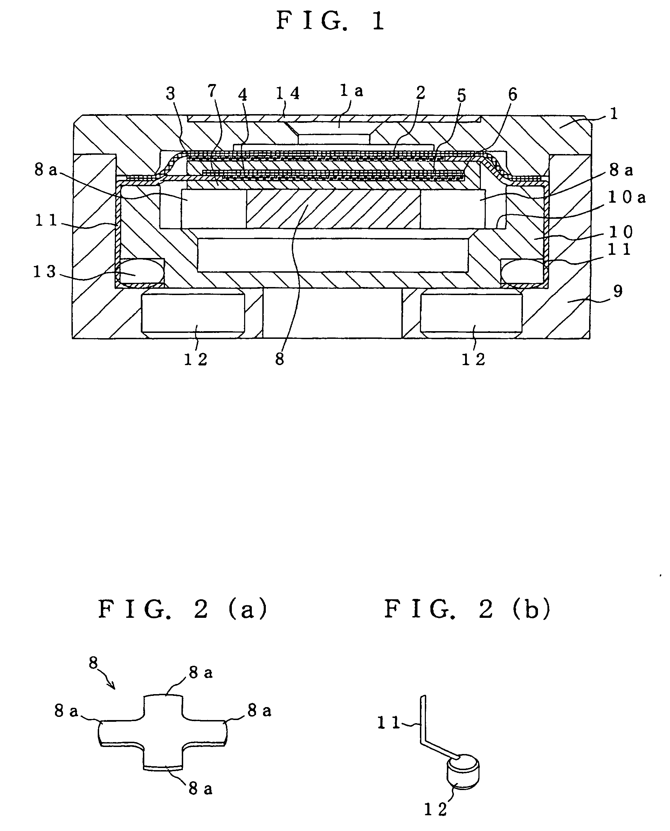

In the drawings
Fig. 1 is a cross-sectional view showing an embodiment of a voltaic gas sensor according to this invention. Figs. 2(a) and 2(b) respectively show an embodiment of a support and an external terminal used in the same sensor.

Fig. 1 shows an embodiment of a voltaic gas sensor according to this invention. A working electrode 3 made of a layer of an electrically conductive active substance, such as platinum black, formed on a diaphragm 2 admitting a gas to be detected and having a water-repellent property is disposed below a gas inlet la at the center of a cover 1 of a sensor casing. Below the working electrode 3 are placed a sheet 4 impregnated with an electrolyte, which is a filter paper in the embodiment described here, and a selectively permeable film 5 substantially not permitting the permeation of a gas to be detected while permitting the permeation of oxygen, which is a film of fluorinated ethylene propylene (FEP) resin in this embodiment.

A counter electrode 6 is formed integrally, by vapordepositing or printing a layer of an electrically conductive substance, on the back surface of the film 5 that is activated and roughened.

In this embodiment, the counter electrode 6 is covered with a second sheet 7 impregnated with an electrolyte and a laminated assembly thus formed is elastically held in the casing by the cover 1 and a support 8.

The casing comprises the cover 1 having a gas inlet 1a in the central part thereof, a cylindrical casing proper 9 having a through-hole 1a at the center thereof and a cylindrical intermediate casing 10 with one end closed that is adapted to fit in the casing proper 9. The cover 1 and casing proper 9 are fastened together.

The intermediate casing 10 with one end closed has a stepped portion 10a that supports the tips of at least three projections 8a of the support 8 shown in Fig. 2(a).

External terminals 12 to each of which a lead 11 in foil form is connected beforehand as shown in Fig. 2 (b) are inserted in the bottom of the casing proper 9. The lead 11 is passed between the casing proper 9 and intermediate casing 10, with one end of which is brought into contact with the working electrode 3 and the other end with the counter electrode 6 whereby the working and counter electrodes 3 and 6 are connected to the external terminals 12. Reference numerals 13 and 14 respectively designate a ring-shaped sealing packing and a filter for dust removal.

When a gas to be detected admitted through the gas inlet la permeates the diaphragm 2 of this embodiment, an electric current proportional to the concentration of the gas is generated between the working and counter electrodes 3 and 6 and an electric signal corresponding to the gas concentration can be taken from the terminals 12.

The gas and oxygen having permeated the diaphragm 2 pass through the sheet 4 impregnated with the electrode and diffuse to the counter electrode 6. With the flow of the gas arrested by the film 5 that holds the counter electrode 6, however, only oxygen permeates the sheet 4. This prevents the gas from reaching the counter electrode as much as possible. Therefore, the gas sensor according to this invention accurately determines the concentration of the gas, though the working and counter electrodes 3 and 6 are spaced apart from each other only by such a small distance as the thickness of the sheet 4.

A film of polyethylene performs the same function as the film of fluorinated ethylene propylene (FEP) resin that is used in this embodiment as the selectively permeable film substantially not permitting the permeation of a gas to be detected while permitting the permeation of oxygen.

The counter electrode 6, which is formed, in the embodiment just described, as a layer on the surface of the selectively permeable film 5 substantially not permitting the permeation of a gas to be detected while permitting the permeation of oxygen, may also be formed separately from the film 5 and attached to the back thereof.

## Claims

1. A voltaic gas sensor for detecting a gas other than oxygen, the sensor comprising a working electrode (3) formed by attaching a layer of an electrically conductive active substance on a diaphragm (2) admitting said gas and having a water-repellent property, a selectively permeable film (5) substantially not permitting the permeation of said gas while permitting the permeation of oxygen, a counter electrode (6) stuck fast to the back of said selectively permeable film, and a sheet (4) impregnated with an electrolyte disposed between said working electrode and said selectively permeable film, said diaphragm being held in a casing in such a manner as to be exposed to the atmosphere, said casing comprising a cover (1) having an opening (1a) in the central part thereof and a cylindrical casing proper (9)
**characterised in that:**
said casing comprises further a cylindrical intermediate casing (10) with one end closed, with an elastic frame (8) whose periphery (8a, 8a, 8a, 8a) is supported by said cylindrical intermediate casing with one end closed; and
said cover holds said working and counter electrodes and said sheet therebetween.

2. A voltaic gas sensor according to claim 1, in which said counter electrode (6) is formed on the surface of the selectively permeable film (5).

3. A voltaic gas sensor according to claim 1, in which external terminals (12) are inserted in the bottom of the casing proper (9) and connected to said working (3) and counter (6) electrodes through a lead (11) passed between said casing proper and said intermediate casing (10).

## Patentansprüche

1. Galvanischer Gassensor zum Nachweis eines Gases mit Ausnahme von Sauerstoff, wobei der Sensor eine Arbeitselektrode (3), die durch Anbringen einer Schicht eines elektrisch leitenden Wirkstoffs auf einer Membran (2) ausgebildet ist, die das Gas einlässt und eine Wasser abweisende Eigenschaft hat, und einen selektiv durchlässigen Film (5), der im Wesentlichen das Eindringen des Gases nicht gestattet, während das Eindringen von Sauerstoff gestattet wird, eine Gegenelektrode (6), die fest auf die Rückseite des selektiv durchlässigen Films geklebt ist und ein Sheet (4) aufweist, das mit einem Elektrolyt imprägniert ist, der zwischen der Arbeitselektrode und dem selektiv durchlässigen Film angeordnet ist, wobei die Membran in einem Gehäuse derart gehalten wird, dass es zur Atmosphäre hin offen ist und das Gehäuse eine Abdeckung (1) aufweist, die eine Öffnung (la) in dessen Mittelteil und ein zylindrisches Eigengehäuse (9) besitzt, **dadurch gekennzeichnet, dass**:
das Gehäuse ein zylindrisches Zwischengehäuse (10) mit einem geschlossenen Ende, mit einem elastischen Rahmen (8) aufweist, dessen Peripherie (8a, 8a, 8a, 8a) vom zylindrischen Zwischengehäuse mit einem geschlossenen Ende abgestützt wird; und
dieses Gehäuse die Arbeits- und Gegenelektroden und das Sheet dazwischen aufnimmt.

2. Galvanischer Gassensor gemäß Anspruch 1, bei dem die Gegenelektrode (6) auf der Oberfläche des selektiv durchlässigen Films (5) ausgebildet ist.

3. Galvanischer Gassensor gemäß Anspruch 1, bei dem externe Anschlussklemmen (12) im Boden des Eigengehäuses (9) eingelassen und mit den Arbeits- (3) und Gegenelektroden (6) durch eine Leitung (11) verbunden sind, die zwischen dem Eigengehäuse und dem Zwischengehäuse (10) hindurchgeführt ist.

## Revendications

1. Capteur de gaz voltaïque permettant de détecter un gaz autre que l'oxygène, le capteur comprenant une électrode de travail (3) formée en fixant une couche de substance active électroconductrice sur une membrane (2) admettant ledit gaz et ayant une propriété hydrophobe, une pellicule sélectivement perméable (5) ne permettant essentiellement pas la perméation dudit gaz tout en permettant la perméation de l'oxygène, une contre-électrode (6) fermement collée au dos de ladite pellicule sélectivement perméable, et une feuille (4) imprégnée d'un électrolyte disposée entre ladite électrode de travail et ladite pellicule sélectivement perméable, ladite membrane étant contenue dans un boîtier de manière à ne pas être exposée à l'atmosphère, ledit boîtier comprenant un capot (1) présentant une ouverture (la) dans sa partie centrale et un boîtier cylindrique proprement dit (9),
**caractérisé en ce que** :
ledit boîtier comprend en outre un boîtier intermédiaire cylindrique (10) dont une extrémité est obturée, avec un cadre élastique (8) dont la périphérie (8a, 8a, 8a, 8a) est soutenue par ledit boîtier intermédiaire cylindrique dont une extrémité est obturée ; et
ledit capot contient ladite électrode de travail et ladite contre-électrode et ladite feuille disposée entre celles-ci.

2. Capteur de gaz voltaïque selon la revendication 1, dans lequel ladite contre-électrode (6) est formée à la surface de la pellicule sélectivement perméable (5).

3. Capteur de gaz voltaïque selon la revendication 1, dans lequel des bornes externes (12) sont insérées dans le fond du boîtier proprement dit (9) et reliées à ladite électrode de travail (3) et à ladite contre-électrode (6) au moyen d'un fil (11) passant entre ledit boîtier proprement dit et ledit boîtier intermédiaire (10).
